(19) Europäisches Patentamt
European Patent Office
Office européen des brevets

(11) Veröffentlichungsnummer: **0 259 647 B1**

(12) **EUROPÄISCHE PATENTSCHRIFT**

(45) Veröffentlichungstag der Patentschrift: **15.04.92**

(51) Int. Cl.$^5$: **C09D 133/04**, C09D 5/44

(21) Anmeldenummer: **87111852.7**

(22) Anmeldetag: **15.08.87**

# (54) Fremdvernetzende Bindemittelkombination, diese enthaltende wässriges Überzugsmittel und dessen Verwendung.

(30) Priorität: **19.08.86 DE 3628119**

(43) Veröffentlichungstag der Anmeldung:
**16.03.88 Patentblatt 88/11**

(45) Bekanntmachung des Hinweises auf die Patenterteilung:
**15.04.92 Patentblatt 92/16**

(84) Benannte Vertragsstaaten:
**AT BE CH DE ES FR GB IT LI NL SE**

(56) Entgegenhaltungen:
**DE-A- 3 436 346**

(73) Patentinhaber: **Herberts Gesellschaft mit beschränkter Haftung**
**Christbusch 25**
**W-5600 Wuppertal 2(DE)**

(72) Erfinder: **Hendrikx, Georg, Dr.-Chem.**
**Nordrather-Strasse 76**
**W-5620 Velbert 15(DE)**
Erfinder: **Patzschke, Hans Peter, Dr.- Chem.**
**Am Heckendorn 71**
**W-5600 Wuppertal 2(DE)**
Erfinder: **Göbel, Armin, Dipl.-Ing.**
**Osteroder-Strasse 27**
**W-5600 Wuppertal 2(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine fremdvernetzende Bindemittelkombination für wasserverdünnbare Lacke, die vorzugsweise elektrophoretisch abscheidbar sind, sowie an der Kathode abscheidbare wäßrige Elektrotauchlacküberzugsmittel (KTL-Bäder) und deren Verwendung zum Beschichten von Gegenständen.

Elektrotauchlacküberzugsmittel werden großtechnisch als Grundierungen eingesetzt. Sie werden auch als Elektrophoreselacke oder EC-Lacke bezeichnet.

Die zur Herstellung von farbtonbeständigen Lackierungen, wie sie beispielsweise für die Hausgeräte-Industrie gebraucht werden, verwendeten Bindemittel auf Basis Poly(meth)acrylatharz zeigen bisher nicht das hohe Korrosionsschutzniveau, wie es in der Autoindustrie mit Amino-Epoxidharzen erreicht wird.

Die thermische Vernetzung dieser Systeme erfolgt nach unterschiedlichen Verfahren, z.B. durch Reaktionen von funktionellen Gruppen des Basisharzes mit Formaldehyd-Kondensationsharzen, blockierten Polyisocyanaten oder umesterungsfähigen Vernetzungsmitteln. Je nach Anforderungen der Kunden werden dabei nicht alle Wünsche an die Eigenschaften des Lackes erfüllt.

In der DE-A-34 36 346 werden wäßrige nicht-vergilbende Elektrotauchlacküberzugsmittel beschrieben, die als Basisharz primäre und/oder sekundäre Hydroxylgruppen und primäre, sekundäre und/oder tertiäre Aminogruppen enthaltende Kunstharz-Bindemittel wie Amino-poly(meth)acrylatharze mit einer Hydroxylzahl von 80 bis 250 (mg KOH pro g Festharz), einer Aminzahl von 30 bis 150 (mg KOH pro g Festharz) und einer mittleren Molmasse ($\overline{M}n$) von 250 bis 10 000 enthalten. Dieses Harzsystem hat den Nachteil eines nicht genügenden Korrosionsschutzes, besonders an den Kanten und Ecken der beschichteten Gegenstände.

Aufgabe der Erfindung ist die Bereitstellung von fremdvernetzenden Bindemittelkombinationen für wasserverdünnbare nicht-vergilbende Lacke bzw. von insbesondere elektrophoretisch abscheidbaren wäßrigen Elektrotauchlacküberzugsmitteln, die zu einer verbesserten Kantenabdeckung bei elektrophoretischer Abscheidung an der Kathode, anschließender Spülung mit Wasser und Einbrennen führen.

Es hat sich überraschenderweise gezeigt, daß diese Aufgabenstellung dadurch gelöst werden kann, daß eine Bindemittelkombination aus einem speziellen mit Wasser verdünnbaren Amino- und Hydroxylgruppen enthaltenden Poly(meth)acrylatharz (Komponente A) ) mit einem Vernetzungsmittel (Komponente B) ) bereitgestellt wird.

Gegenstand der Erfindung ist daher die in den Patentansprüchen beschriebene fremdvernetzende Bindemittelkombination für wasserverdünnbare Lacke, die unter deren Verwendung bereiteten, elektrophoretisch abscheidbaren wäßrigen Überzugsmittel und deren Verwendung zum Beschichten von Gegenständen.

Bei der erfindungsgemäß eingesetzten Komponente A) handelt es sich um ein Hydroxylgruppen enthaltendes Poly(meth)acrylatharz, das Anteile von polyungesättigten Monomeren einpolymerisiert enthält und nach Neutralisation mit Säuren wasserlöslich bzw. wasserverdünnbar ist.

Das basische Gruppen enthaltende Polymerisatharz der Komponente A) wird durch Lösungspolymerisation hergestellt und hat eine Hydroxylzahl von bevorzugt 30 bis 450, inbesondere 50 bis 100 mg KOH pro g Festharz. Die zahlenmittlere Molmasse ($\overline{M}n$) liegt bevorzugt bei 500 bis 50 000 und insbesondere bei 1000 bis 10 000 (gemessen durch Gelpermeationschromatographie, geeicht mit Polystyrolfraktionen). Seine Viskosität beträgt bevorzugt 0,1 bis 10 Pa•s, insbesondere 0,5 bis 5 Pa•s in 50%iger Lösung in Monoglykolethern (insbesondere Butoxyethanol ) bei 25 °C. Seine Glasübergangstemperatur (errechnet aus den Glasübergangstemperaturen der Homopolymerisate) liegt insbesondere bei -50 bis +150 °C, bevorzugt bei -20 bis +50 °C. Die geeigneten mittleren Molmassen bzw. Viskositäten können auch dadurch erhalten werden, daß Harze mit höherer und niedriger Molmasse bzw. Viskosität vermischt werden.

Die basische Gruppen enthaltenden Polyacrylatharze können nach dem Stand der Technik, wie er beispielsweise in der DE-A-15 46 854, der DE-A-23 25 177 oder der DE-A-23 57 152 beschrieben wird, hergestellt werden. Einsetzbare ethylenisch ungesättigte Monomere sind praktisch radikalisch polymerisierbare Monomere , wobei jedoch die üblichen Einschränkungen für Copolymerisationen gelten, die durch das Q- und e-Schema nach Alfrey und Price, bzw. durch die Copolymerisationsparameter vorgegeben sind ( vgl. Brandrup und Immergut, Polymer Handbuch, 2nd edition, John Wiley and Sons, New York 1975). Da es sich bei der Komponente A) um ein basisches Poly(meth)acrylatharz mit Aminogruppen handelt, ist das Harz nach Neutralisation mit organischen Säuren mit Wasser verdünnbar.

Ein derartiges Aminogruppen und Hydroxylgruppen enthaltendes Mischpolymeres wird bevorzugt durch Polymerisation in Lösung erhalten. Es weist insbesondere eine Aminzahl von 30 bis 150, bevorzugt von 45 bis 100 mg KOH pro g Festharz auf.

Die Komponente A) kann hergestellt werden aus radikalisch polymerisierbaren aminogruppenhaltigen Monomeren und radikalisch polymerisierbaren hydroxylgruppenhaltigen Monomeren mit radikalisch polymerisierbaren Monomeren, die keine weiteren reaktiven Gruppen enthalten, oder aus radikalisch polymerisierbaren Monomeren, die sowohl Aminogruppen als auch Hydroxylgruppen enthalten, zusammen mit den radikalisch polymerisierbaren Monomeren, die keine weiteren reaktiven Gruppen enthalten.

Dabei wird so gearbeitet, daß entweder 6 bis 40 Gewichtsteile der radikalisch polymerisierbaren aminogruppenhaltigen Monomeren (Komponente a) ) und 4 bis 50 Gewichtsteile der radikalisch polymerisierbaren hydroxylgruppenhaltigen Monomeren (Komponente b) ) oder 8 bis 60 Gewichtsteile der radikalisch polymerisierbaren hydroxy-und aminogruppenhaltigen Monomeren (Komponente ab) ) und 9,9 bis 80 Gewichtsteile der radikalisch polymerisierbaren Monomeren, die außer der ethylenischen Bindung keine weiteren reaktiven Gruppen enthalten (Komponente c) ) sowie 0,1 bis 7 Gewichtsteile polyungesättigte Monomere (Komponente d) ) eingesetzt werden.

Als aminogruppenhaltige Monomere werden Monomere der allgemeinen Formel

$R\text{-}CH=CR'\text{-}X\text{-}A\text{-}N(R'')_2$

eingesetzt, wobei

R = -R′ oder $-X-C_nH_{2n+1}$
R′ = -H oder $-C_nH_{2n+1}$
R″ = -R′, $-C_nH_{2n}OH$ und/oder $-C_nH_{2n}NR_2$
X = -COO-, -CONH-,$-CH_2O-$ oder -Ø-,
A = $-C_nH_{2n}-$ oder

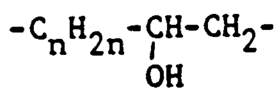

und
n = 1 bis 8, bevorzugt 1 bis 3 bedeuten.

Beispiele für ungesättigte N-gruppenhaltige Monomere sind N-Dialkyl- oder N-Monoalkyl-aminoalkyl-(meth)acrylate oder die entsprechenden N-Alkanol-Verbindungen wie beispielsweise N-Diethyl-aminoethylmethacrylat oder N-tert-Butylaminoethylacrylat, N-Dialkyl- oder N-monoalkylaminoalkyl(meth)acrylamid oder die entsprechenden N-Alkanol-Verbindungen wie beispielsweise N-Dimethyl-aminoethanolacrylamid und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden solche verstanden, die außer einer polymerisierbaren ethylenisch ungesättigten Gruppe noch mindestens eine Hydroxylgruppe an einem C2 bis C20 linearen, verzweigten oder cyclischen Kohlenstoffgerüst enthalten. Es sind hauptsächlich ungesättigte Veresterungsprodukte der allgemeinen Formel

$R\text{-}CH=CR'\text{-}X\text{-}B$

worin R,R′ und X wie vorstehend definiert sind, und
B eine lineare oder verzweigte $C_{1-6}$Alkylgruppe mit 1-3 OH-Gruppen ist.

Besonders geeignet sind (Meth)acrylsäure-hydroxyalkylester wie beispielsweise 2-Hydroxyethylacrylat, 2-Hydroxypropylmethacrylat, Butandiol-1.4-monoacrylat, 2.3-Dihydroxypropylmethacrylat, Pentaerythrit-monomethacrylat, Polypropylenglykol-monoacrylat oder auch Fumarsäuredihydroxyalkylester. Es können jedoch auch N-Hydroxyalkyl(meth)acrylamide oder N-Hydroxyalkylfumarsäure-mono- oder diamide wie beispielsweise N-Hydroxyethyl-acrylamid oder N-(2-Hydroxypropyl)-methacrylamid eingesetzt werden. Besonders elastische Eigenschaften sind beim Einsatz eines Reaktionsproduktes von Hydroxyalkyl(meth)acrylat mit ε-Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2.3-Dihydroxypropylmonoallylether, Trimethylolpropan-monoallylether oder 2.3-Dihydroxypropansäureallylester. Besonders geeignet sind Hydroxyethyl-, Hydroxypropyl- und/oder Butandiol-1.4-(meth)acrylat.

Die Auswahl der radikalisch polymerisierbaren Monomeren, die keine weiteren reaktiven Gruppen enthalten, erfolgt nach den mechanischen Eigenschaften des Films und der Verträglichkeit der dabei eingesetzten Harzkombination. Es werden Acrylsäure-alkylester, Methacrylsäure-alkylester, Maleinsäure- und/oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)-aromatischer Rest angeordnet sind. "Harte" Monomere mit einer hohen Glasübergangstemperatur als

Polymere sind beispielsweise Monomere vom Vinylaromatentyp wie Styrol, α-substituierte Styrole wie α-Methylstyrol, o-, m- und p-Alkylstyrole wie Vinyltoluol oder p-tert-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornyl-methacrylat, Dihydrodicyclopentadienyl-methacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat, 2-Ethylhexylacrylat und/oder Laurylacrylat. Es können auch ungesättigte Ether wie Ethoxyethylmethacrylat oder Tetrahydrofurfurylacrylat eingesetzt werden.Monomere vom Vinylestertyp, vorzugsweise Vinylester α-verzeigter Monocarbonsäuren, besonders der Versatigsäurevinylester,können auch einpolymerisiert werden, wenn geeignete Reaktionsbedingungen und Reaktionscomonomere ausgewählt werden.
Unter ethylenisch polyungesättigten Monomeren werden Verbindungen mit mindestens 2 radikalisch polymerisierbaren Doppelbindungen nach der allgemeinen Formel $R\text{-}CH=CR'\text{-}D\text{-}(\text{-}CR'=CH\text{-}R)_m$, wobei m =1 bis 3, bevorzugt m = 1 ist, verstanden, wobei außer den weiter oben angegebenen Bedeutungen D das allgemeine, tragende chemische Grundgerüst für die reaktive Doppelbindung ist. Beispiele für D sind der o-, m- oder p-Phenylenrest und Reste der Formel -X-Alkyl-X'-, worin Alkyl bevorzugt 2 bis 10 C-Atome aufweist, X und X' gleiche oder verschiedene verbindende Gruppen, z.B. -O-, -CONH-, -COO-, -NHCOO- oder -NH-CO-NH sind. D kann z.B. ein Benzolring wie im Divinylbenzol sein, der gegebenenfalls auch substituiert sein kann wie p-Methyldivinylbenzol odero-Nonyldivinylbenzol. Weitere Beispiele für geeignete polyungesättigte Monomere sind Reaktionsprodukte aus Polyalkoholen, besonders Dialkoholen, mit α,β-ungesättigten Carbonsäuren, wie sie schon definiert sind. Beispiele hierfür sind Ethandiol-diacrylat, Ethylenglykoldimethacrylat, 1.4-Butandiol-diacrylat, 1.6-Hexandiol-diacrylat, Neopentylglykol-dimethacrylat, Triethylenglykoldimethacrylat, Polyglykol-400-diacrylat, Glycerin-dimethacrylat, Trimethylolpropan-triacrylat und/oder Pentaerythritdiacrylat. Urethan- und amidgruppenhaltige polyfunktionelle Monomere werden hergestellt durch Reaktion von beispielsweise Hexandiisocyanat oder Methacrylsäure-β-isocyanatoethylester mit Hydroxyethyl(meth)acrylat oder (Meth)acrylsäure. Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandiol-diacrylat oder Hexandiol-diacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskosität ohne Gelierung zu erhalten.

Die Copolymerisation erfolgt in bekannter Weise durch Lösungspolymerisation unter Zusatz von radikalischen Initiatoren, sowie gegebenenfalls Molekulargewichtsreglern bei Temperaturen von 50 bis 160 ° C. Sie erfolgt in einer Flüssigkeit, in der sich Monomere und Polymere gemeinsam lösen. Der Gehalt an Monomeren bzw. Polymeren nach der Auspolymerisation beträgt dabei etwa 50 bis 90 Gew.-%. Es wird eine Lösungspolymerisation in organischen Lösemitteln bevorzugt, die mit Wasser verdünnbar sind.Solche Lösemittel sind beispielsweise Ethylenglykol, Ethoxyethanol, Butoxyethanol, Diethylenglykol, Triethylenglykol, Diethylenglykol-dimethylether, Propylenglykol, Methoxypropanol, Ethoxypropanol, Dipropylenglykolmonomethylether, Dipropylenglykol-dimethylether, Diacetonalkohol, Ethanol, Isopropanol, sek. Butanol, tert. Butanol, Aceton, Methoxypropanon, Dioxan, Tetrahydrofuran, N-Methylpyrrolidon oder ihren Gemischen. Zur Verlaufsverbesserung und zum Senken des Schichtwiderstandes kann auch anteilweise ein nichts-wasserlösliches, hochsiedendes Lösemittel zugesetzt werden wie Hexylenglykol, Phenoxyethanol, Ethylhexanol, Isodekanol oder 2.2.4-Trimethylpentandiol-1.3-monoisobutyrat. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden.Der Initiator wird entweder im Monomerengemisch kalt gelöst oder aus Sicherheitsgründen während des Zulaufs der Monomeren getrennt zudosiert. Als Katalysatoren, die in organischen Lösemitteln löslich sind, werden 0,1 bis 5 Gew.-%, bevorzugt 0,5 bis 3 Gew.-% bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctoat oder tert.-Butylperbenzoat. Thermisch zerfallende Azo-Verbindungen sind beispielsweise 2.2'-Azo-bis-(2-cyanopropan) oder 1.1'-Azo-bis-cyclohexancarbonitril. Als Initiatoren können auch radikalbildende Verbindungen vom Dibenzyltyp wie 1.2-Bis-(4-methylphenyl)1.2-dicarboethoxy-1,2-dicyanoethan verwendet werden. Durch den Einsatz von Reglern kann das Molekulargewicht in bekannter Weise herabgesetzt werden. Bevorzugt werden hierzu

Mercaptane, halogenhaltige Verbindungen und andere radikalübertragende Substanzen eingesetzt. Besonders bevorzugt sind n- oder tert.-Dodecylmercaptan, Tetrakis-mercaptoacetylpentaerythrit, tert.-Butyl-o-thiokresol, Thiosalicylsäure, Buten-1-ol oder dimeres $\alpha$-Methylstyrol.

Die Herstellung von Amino-(Meth)acrylatharzen kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssigem Ammoniak, primären und/oder sekundären Monoaminen und/oder Monoaminoalkoholen umgesetzt und anschließend der Aminüberschuß abdestilliert. Eine ähnliche Umsetzung kann beispielsweise bevorzugt in äquivalenten Mengen mit Ketiminen von Polyaminen erfolgen, die eine sekundäre Aminogruppe und eine oder mehrere primäre Amonogruppen enthalten wie beispielsweise das Monoketimin aus Methylisobutylketon und Methylaminopropylamin oder das Diketimin aus Methylisobutylketon und Diethylentriamin. Epoxidgruppen enthaltende radikalisch polymerisierbare monoethylenisch ungesättigte Monomere sind Mono- und/oder Diglycidylverbindungen von $\alpha,\beta$-ungesättigten Säuren, Säureamiden, Alkoholen oder Aminen wie beispielsweise Gylcidylester der (Meth)acrylsäure, der Fumarsäure und/oder Maleinsäure, der Fumarsäure-und/oder Maleinsäuremonoalkylester, sowie Glycidylverbindungen von (Meth)acrylsäureamid, Fumarsäurediamid, Maleinsäurediamid oder Maleinimid und/oder Glycidylether von ungesättigten Alkoholen wie Vinyl- und/oder Allylalkohol. Andere geeignete Verbindungen sind Monoglycidylester von Dicarbonsäuremonoestern mit ungesättigten Alkoholen wie Phthalsäure-allyl-glycidylester. Es können jedoch auch Vinyl- und Allylester von epoxidierten Fettsäuren eingesetzt werden wie 2.3-Epoxy-buttersäure-allylester oder Epoxy-stearinsäureallylester. Außerdem eignen sich auch Diolefine, deren eine Doppelbindung epoxidiert worden ist, wie Vinyl-ethylenoxid, 1-Methyl-1-vinyl-ethylenoxid oder 3.4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenreaktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

R-NH-R′

wobei

R = -H oder R′

R′ = $-C_nH_{2n+1}$, $-C_nH_{2n}OH$ und/oder $-C_nH_{2n}-N=C(Alkyl)_2$ und

n = 1 bis 8, bevorzugt 1 bis 2 betragen;

und Alkyl 1 bis 8 C-Atome hat.

Folgende Amine können beispielsweise für die Reaktion eingesetzt werden: $C_1$ bis $C_6$-Dialkylamine mit gleichen oder verschiedenen Alkylgruppen im Molekül wie Dimethyl-, Diethyl-, Diisopropyl-, Dibutyl-, Methylethyl-, Methylpropyl-, Methylbutylamin, monocycloaliphatische Amine wie Morpholin, Piperidin, Pyrrolidin und/oder Monoalkanolamine wie N-Methylaminoethanol und/oder Dialkanolamine wie Diethanolamin, Diisopropanolamin. Beispiele für primäre Amine oder Aminoalkohole sind $C_1$ bis $C_8$-Alkylamine wie Ethylamin, 2-Ethylhexylamin oder Aminoethanol. In jedem Fall sind $C_1$ bis $C_4$-Alkylgruppen, insbesondere $C_1$ und/oder $C_2$-Alkylgruppen bevorzugt. Besonders bevorzugt sind sekundäre Amine wie Dimethylamin,Diethylamin,Methylethylamin oder N-Methyl-aminoethanol,weil damit nach Neutralisation gut lösliche ET-Bäder mit hohem pH-Wert erhalten werden können.Die oben erwähnten primären Amine werden meistens im Gemisch mit sekundären Aminen eingesetzt, weil sonst zu hochviskose Produkte entstehen.

Die Zahl der primären und/oder sekundären Hydroxylgruppen wird so optimiert, daß beim Einbrennen des Lacks ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebracht, mindestens eine weitere Hydroxylgruppe pro Molekül, bevorzugt primäre Hydroxylgruppe über andere ungesättigte Monomere einzupolymerisieren. Die Zahl der Epoxidgruppen bestimmt die Zahl der damit zur Umsetzung kommenden Aminogruppe und damit auch die Löslichkeit des Produktes. Es soll mindestens eine Epoxidgruppe pro Molekül vorhanden sein. Oft ist es vorteilhaft, eine erhöhte Hydroxylzahl mit einer niedrigen Aminzahl und umgekehrt zu kombinieren. Das Entwicklungsziel ist im allgemeinen ein gut lösliches Produkt bei niedrigem Neutralisationsgrad und möglichst hohem pH-Wert.

Die vorstehend beschriebene fremdvernetzende epoxidgruppenfreien Amino-poly(meth)acrylatharze

werden als Bindemittel für die kathodische Abscheidung in ET-Bädern (KTL-Bädern) verwendet.

Die erfindungsgemäße BIndemittelkombination enthält außer den Amino- und Hydroxy-poly(meth)-acrylatharzen (Komponente A) ) noch Vernetzungsmittel, die als Komponente B) bezeichnet werden. Außerdem können übliche Zusatzstoffe enthalten sein, wie dies im einzelnen beschrieben ist in den eingangs genannten Patentschriften betreffend KTL-Bäder, die teilweise nachfolgend genauer erörtert werden. Möglich ist auch der Zusatz von Pastenbindemittel als Komponente C). Beispiele für die Komponente B) sind Formaldehyd-Kondensationsharze (Harnstoff-, Melamin-, Benzoguanamin und/oder Phenol-Formaldehydharze), blockierte Isocyanate und/oder Harze mit umesterungsfähigen Estergruppen unter Zusatz von üblichen Katalysatoren. Um die guten Eigenschaften des Amino-poly(meth)acrylatharzes auszunutzen und ET-Bäder mit möglichst hohem pH-Wert zu erhalten, werden blockierte aliphatische oder cycloaliphatische Polyisocyanate oder Harze mit umesterungsfähigen Estergruppen oder ihre Mischungen bevorzugt.

Wie gemäß dem Stand der Technik werden auf 50 bis 95 Gew.-% der Komponente A) 50 bis 5 Gew.-% Vernetzungsmittel eingesetzt, wobei als Vernetzungsmittel die aus dem Stand der Technik (vgl. die eingangs genannten Literaturstellen) bekannten Produkte eingesetzt werden können. Mit den erfindungsgemäßen Bindemitteln erhaltene KTL-Bäder können gegebenenfalls zusätzlich bis zu 30 Gew.-% hydroxyfunktionelle Harze einemulgiert enthalten, die mit den Vernetzungsmitteln reaktionsfähig sind ( vgl. z.B. EP-A-0 04 090).

Das Mischungsverhältnis der Komponenten A) und

B)

liegt bevorzugt zwischen 90 zu 10 und 60 zu 40 und wird empirisch aus den optimal erreichbaren anwendungstechnischen Eigenschaften bei der gegebenen Einbrenntemperatur bestimmt. Eine Kombination mehrerer Vernetzungssysteme kann vorteilhaft hat.

Das Vernetzungsmittel hat eine mittlere Molmasse ($\overline{M}n$) von etwa 250 bis 5000, speziell 500 bis 3000. Optimale Eigenschaften werden erhalten, wenn man bezogen auf die Summe der Vernetzungsmittel als Festharz 5 bis 95 Gew.-% blockiertes Polyisocyanat mit 95 bis 5 Gew.-% umesterungsfähiges Vernetzungsmittel mischt. Besonders bevorzugt wird ein Mischungsverhältnis von blockiertem Polyisocyanat zu umesterungsfähigem Vernetzungsmittel von 1:4 bis 4:1, ganz besonders bevorzugt von 1:2 bis 2:1.
Blockierte Polyisocyanate werden dadurch hergestellt, daß man ein multifunktionelles Isocyanat mindestens mit einer stöchiometrischen Menge einer monofunktionellen, aktiven Wasserstoff (Zerewitinoff-Reaktion) enthaltenden Verbindung umsetzt, wobei gegebenenfalls basische Katalysatoren wie tert.-Amine oder geringe Mengen an Zinnsalzen wie Dibutylzinndilaurat zugegeben werden können. Die Isocyanatgruppe wird auf diese Weise bei Raumtemperatur gegen Reaktionen mit Wasser oder Alkoholen geschützt. Das erhaltene Reaktionsprodukt setzt sich beim Erwärmen mit den Hydroxylgruppen des Amino-poly(meth)-acrylatharzes um, wobei die Schutzgruppe wieder abgespalten wird. Sie spaltet sich bei Einbrenntemperaturen von weniger als 210 ° C, vorzugsweise weniger als 190 ° C, besonders unter 180 ° C, andererseits über 110 ° C, vorzugsweise über 140 ° C, besonders bevorzugt über 150 ° C, wieder ab, damit die freiwerdende Isocyanatgruppe mit dem Basisharz reagieren kann. Mittel, die die Isocyanate blockieren, enthalten nur eine einzige Amin-, Amid-, Lactam-, Thiol- oder Hydroxylgruppe.

So haben sich beispielsweise bewährt aliphatische oder cycloaliphatische Alkohole wie 2-Ethylhexanol, Dialkylaminoalkohol wie Dimethylaminoethanol, Oxime wie Methylethylketoxim, Lactame wie $\epsilon$-Caprolactam oder Pyrrolidon-2, Imide wie Phthalimid oder N-Hydroxymaleinimid, Hydroxyalkylester, Malonsäure- oder Acetessigsäureester. Es werden aber auch $\beta$-Hydroxyglykole oder -glykolether und Glykolamide empfohlen.

Als typische multifunktionelle Isocyanate eignen sich aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethan-diisocyanat, Diphenyltetraisocyanat, Naphthyltetraisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat. Aliphatische Diisocyanate sind Verbindungen der Formel

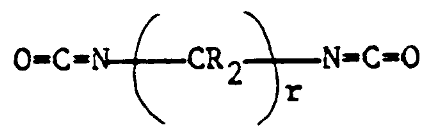

worin r eine ganze Zahl von 2 bis 20, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethan-diisocyanat.

Vinylpolymerisate, die neben Isocyanatgruppen neben z.B. Cyanatoethyl(meth)acrylat oder Dimethylisopropylbenzylisocyanat als Comonomere noch Alkyl(meth)acrylate und/oder (Alkyl)vinylbenzole enthalten, können auch verwendet werden.

Gemischte aliphatisch aromatische Verbindungen sind auch geeignet.

Als Triisocyanate haben sich Produkte bewährt, die durch Trimerisation oder Oligomerisation von Diisocyanaten oder durch Reaktion von Diisocyanaten mit polyfunktionellen OH-oder NH-Gruppen enthaltenden Verbindungen entstehen. Hierzu gehören beispielsweise die schon bei der Komponente B) beschriebenen Handelsprodukte.

Falls notwendig kann die mittlere Funktionalität gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Eine Molekülvergrößerung kann auch durch Reaktion mit tert. Aminogruppen enthaltenden Polyalkoholen wie N-Methyldiethanolamin, Triethanolamin oder tertiäre Aminogruppen enthaltenden Polyaminen wie 3-(Methyl)-3-(2-Aminoethyl)aminopropylamin erfolgen. Um die Löslichkeit zu verbessern, können außerdem kettenabbrechende N-Dialkylaminoalkohole wie Dimethyl-aminoethanol oder N,N-Dialkylalkylendiamine wie Dimethylaminopropylamin oder N,N-Diethyl-N′-Methyl-1,3-ethandiamin eingesetzt werden. Isocyanathaltige Präpolymere auf Basis von Polyglykolethern, Polyesterpolyolen, Polyetherpolyolen, Polycaprolactonpolyolen und/oder Polycaprolactampolyolen können ebenfalls mit Vorteil eingesetzt werden. Um nicht-vergilbende Einschichtlacke herstellen zu können, werden aliphatische und cycloaliphatische Polyisocyanate bevorzugt.

Ein anderer geeigneter Typ vernetzungsmittel (Komponente B) ) ist ein Harz mit endständigen oder seitenständigen, veresterten Carboxylgruppen, die im neutralen, wäßrigen Medium weitgehend stabil sind, jedoch im basischen Medium des abgeschiedenen Films bei Temperaturen über etwa 140 °C mit einem oder mehreren hydroxylgruppenhaltigen Aminopoly(meth)acrylaten (Komponente A)) reagieren. Hierbei estern die umesterungsfähigen Estergruppen mit den Hydroxylgruppen des Amino-poly(meth)acrylatharzes unter Abspalten der leichter flüchtigen "alkoholischen Schutzgruppen" um. Es sollen im wesentlichen alle endständigen oder seitenständigen Carboxylgruppen mit Alkoholen verestert sein. Um ein Wandern des Polyesters zur Anode zu vermeiden, ist darauf zu achten, daß er eine Säurezahl unter 20, bevorzugt unter 10, besonders bevorzugt unter 3 hat.

Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe.

Die Umesterung wird unterstützt durch die Flüchtigkeit von niederen linearen oder verzweigten primären Monoalkoholen oder durch 1,2-Glykole, die gegebenenfalls durch Ether- oder Estergruppen substituiert sind. Je niedrigmolekular die Alkohole sind, die bei der Umesterung abgespalten werden, desto niedriger sind die Spaltverluste. In der Literatur werden eine Reihe estergruppenhaltige Vernetzungsmittel beschrieben, die zur Umesterung mit OH-Gruppen und/oder Umamidierung mit $NH_2$-Gruppen eingesetzt werden, z.B.: In der EP-A-0 04 090 werden Polyurethanester beschrieben, die als umesterungsfähige Gruppen Hydroxyalkylestergruppen, wie Milchsäureester, oder Aminoalkylestergruppen enthalten.

Ein anderes Vernetzungsmittel kann ein carboxylgruppenahltiger Polyester sein, dessen Carboxylgruppen durch gegebenenfalls substituierte 1,2-Glykole unter Bildung von β-Hydroxy-Verbindungen blockiert sind:

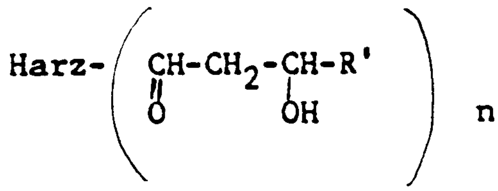

Die eingesetzten 1,2-Glykole sind zweckmäßig durch gesättigte oder ungesättigte Alkyl-, Ether-, Ester- oder Amidgruppen substituiert, d.h. R′ steht für-H, -R, $-CH_2OH$, $-CH_2-O-R$,

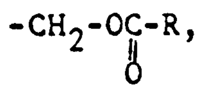 , 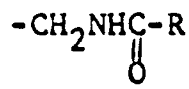 ,

wobei n mindestens 2, bevorzugt einen Wert von 3 bis 10, bedeutet. R ist eine lineare oder verzweigte Alkylgruppe mit 1 bis 15 C-Atomen.

Solche Vernetzungsmittel sind in der EP-A-012 463 und DE-A-31 03 642 beschrieben, z.B. als Reaktionsprodukt von Trimellithsäureanhydrid mit Cardura E®, dem Glycidylester der Versaticsäure®.

Andere Vernetzungsmittel werden durch Umesterung von Dicarbonsäurealkylestern mit Polyalkoholen hergestellt, z.B. ein Reaktionsprodukt aus Trimethylolpropan und Malonsäuredimethylester, wie es in der EP-A-082 291 beschrieben ist.

Andere zur Umesterung befähigte Vernetzungsmittel werden, wie in der DE-A-33 15 469 beschrieben, durch Michael-Addition von Acetessigsäurealkylester oder Malonsäuredialkylester an Harze mit Doppelbindungen, die über CO-Gruppen aktiviert werden, erhalten. Die Michael-Addition kann stöchiometrisch durchgeführt werden oder auch unter Einsatz von überschüssigen Doppelbindungen.

In der DE-A-33 22 766 werden Vernetzungsmittel beschrieben, die Carbalkoxymethylestergruppen enthalten.

Amin-Formaldehyd-Kondensationsharze entstehen durch Reaktion von Aldehyden mit Harnstoff, N-Alkyl-harnstoff, Dicyandiamid, verschiedenen Triazinen, wie Melamin, Benzoguanamin und Acetoguanamin oder ihren Mischungen. Die Aldehyde können dabei monofunktionell, aber auch polyfunktionell sein.Beispiele hierfür sind Formaldehyd und seine Polymerisationsprodukte, wie Paraformaldehyd, Polyoxymethylen, Trioxan, oder aliphatische und cyclische Aldehyde, wie Glyoxal, Acetaldehyd, Acrolein, Propionaldehyd, Butyraldehyd und Furfural. Je nach Reaktionsbedingungen und Methylolierungsgrad werden Harze mit verschiedenen Molekulargewichten und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkohol-, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, wie Cyclohexanol, oder Monoether von Ethylenglykolen, wie Ethoxyethanol oder Butoxyethanol. Sollen Alkohole mit mehr als 4 C-Atomen eingebaut werden, so wird die Methyolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl-(meth)acrylaten oder Allylalkohol ungesättigte Melaminharztypen.

Die Vernetzung von OH-gruppenhaltigen Poly(meth)acrylatharzen mit blockierten Polyisocyanaten kann gegebenenfalls durch Zusatz von 0,01 bis 2 Gew.-% , speziell 0,5 bis 1 Gew.-%, bezogen auf Festharz der Komponente A) stark basische tertiäre Amine und/oder aktive Metallverbindungen beschleunigt werden. Eine besondere, manchmal synergistische Wirkung wird erreicht durch die Kombination von basischem

Medium des abgeschiedenen Amino-Poly(meth)acrylatharz und den Metallsalzen von Wismut, Blei, Cobalt, Eisen, Antimon und/oder Zinn-II und -IV. Besonders bevorzugt werden Katalysatoren wie Eisen-III-acetylacetonat, Dibutyl-zinn-dilaurat, Tri-n-butyl-zinn-oxid, Dibutyl-zinn-dioctyl-maleat, Zinn-octoat, Zinn-oleat, Tetrabutyltitanat und/oder Cobalt-2-ethylhexanoat.

Zur Katalyse des Umesterungsverfahrens ist im allgemeinen ein höherer Katalysatorgehalt notwendig. Zweckmäßig werden 0, 1 bis 10 Gew.-% , bevorzugt 2 bis 6 Gew.-%, bezogen auf die Komponenten A) und B), Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien, 8-Oxy-hydrochinolin, 4-Methyl-catechin und/oder 2,5-Dimercapto-1,3,4-thiodiazol. Beispiele für geeignete Katalysatoren sind Antimontrioxid, Cobaltnaphthenat, Bleioctoat, Eisen-acetylacetonat, das Reaktionsprodukt aus Zinkoxid + 8-Oxyhydrochinolin, Thallium-dicyclopentadien oder Triethanolamin-titanat. Bevorzugt werden Bleioctoat und das Zink-Oxyhydrochinolat. Die Metallkatalysatoren können auch in fein verteilter Form als Pigmente wie Bleisilikat eindispergiert werden. Wasserverdünnbare Metallsalze sind ebenfalls als Umesterungskatalsatoren geeignet, wenn das Metall der Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmäßig vertielen.

Die Komponenten A) und B) können kalt gemischt oder auch bei er höhter Temperatur präkondensiert werden. Dabei reagieren die Komponenten A) und B) in gewissem Umfang miteinander, ohne daß das Gemisch seine Hitzehärtbarkeit und die Eigenschaft, durch Protonisieren mit Säuren wasserlöslich gemacht werden können, verliert.

Zum Ausbalancieren der anwendungstechnischen Eigenschaften ist es zweckmäßig, daß das elektrophoretisch abscheidbare Poly(meth)arcylatharz außer dem Vernetzungsmittel noch zusätzlich bis zu 30 Gew.-% , bevorzugt 5 bis 20 Gew.-% eines hydroxyfunktionellen Harzes enthält, das mit den Vernetzungsmitteln reagiert.

Als Komponente C) kann gegebenenfalls ein spezielles Mischpolymeres als Pastenharz eingesetzt werden wie beispielsweise ein Polymeres aus

a) 80 bis 95 Gew.-% eines Copolymerisats aus

a1) 0,5 bis 40 Gew.-% N[N,N-Di-$C_{1bis4}$-alkylamino-$C_{1bis8}$-alkyl] (meth)acrylamide und/oder einem Gemisch von N,N-Di-$C_{1bis4}$-alkylamino-$C_{1bis8}$-alkyl(meth)acrylaten und N-substituierten (Meth)-acrylamiden und/oder (Meth)acrylamid, wobei das Verhältnis der Amino(meth)acrylate zu den Amido-(meth)acrylaten 1:2 bis 2:1 sein soll,

a2) 10 bis 40 Gew.-% Hydroxy-$C_{2-8}$-alkyl(meth)acrylate,

a3) 20 bis 89,5 Gew.-% copolymerisierbare $\alpha,\beta$-olefinisch ungesättigte Verbindungen und

b) 5 bis 20 Gew.-% eines unverkappte und gegebenenfalls auch verkappte Isocyanatgruppen aufweisenden Polyisocyanats, das Biuret-, Urethan- oder Isocyanurat-Gruppen aufweist.

Seine Herstellung wird in der Patentanmeldung der gleichen Anmelderin DE-OS P 36 28 123.9 und DE-OS 36 28 122.0 vom gleichen Anmeldetag beschrieben.

Als zusätzliche Komponente können zum Steigern des Umgriffs hydroxyfunktionelle Harze mit einer OH-Zahl von 30 bis 500, speziell 50 bis 300 und einer mittleren Molmasse ($\overline{M}n$) von 300 bis 10000, speziell 500 bis 5000 eingesetzt werden. Beispiele für solche Harze sind Styrol-Allylalkohol-Copolymere, OH-gruppenhaltige (Meth)acrylcopolymere, Caprolactonpolyole, Caprolactampolyole, Urethanpolyole, OH-gruppenhaltige Polyether und Polyester. So werden OH-gruppenhaltige Copolymere durch Copolymerisation von ungesättigten, hydroxylgruppenhaltigen Monomeren mit anderen ethylenisch ungesättigten Monomeren, die keine weiteren reaktiven funktionellen Gruppen enthalten, wie schon oben beschrieben, hergestellt. Als Polyetherpolyole werden Verbindungen der allgemeinen Formel

$$H-[O(CHR)_n]_m-OH$$

verstanden, in der R = H oder ein niedrigerer, gegebenenfalls mit verschiedenen Substituenten versehener Alkylrest, n = 2 bis 6 und m = 5 bis 50 ist. Beispiele sind Polyoxytetramethylenglykole. Polyesterpolyole kann man durch Polykondensation von Polycarbonsäuren oder ihren Anhydriden mit organischen Polyalkoholen oder durch Umsetzung eines $\epsilon$-Lactons mit Polyalkoholen erhalten. Üblicherweise sind die Polycarbonsäuren aliphatische, cycloaliphatische oder aromatische Dicarbonsäuren und die Polyalkohole lineare oder verzweigte aliphatische oder cycloaliphatische Polyole. Beispiele sind verzweigte Polyester aus Adipinsäure, Phthalsäureanhydrid, Trimethylolpropan und Butylenglykol-1,4 oder das Reaktionsprodukt von ϵ-Caprolacton mit Trimethylolpropan. Polyurethanpolyole werden durch Umsetzung von aliphatischen, cycloaliphatischen Polalkoholen, Poletherpolyolen und/oder Polyesterpolyolen erhalten. Die verschiedenen hydroxyfuntkionellen Harze können auch als Gemische verwendet werden oder segmentartig aufgebaut sein. Beispiele hierfür sind die Reaktionsprodukte von 2 Mol Polyglykolether mit 1 Mol hydroxylgruppenhaltigem Polyester oder 2 Mol Polyglykolether mit 2 Mol Dicarbonsäure und 1 Mol hydroxylgruppenhaltigem Polyurethan. Die Harze enthalten eine solche Menge an polaren Gruppen, bevorzugt primären OH-Gruppen, daß sie einwandfrei in dem neutralisierten, Amino-poly(meth)acrylatharz (Komponente A) einemulgierbar sind. Zum Erreichen einer besseren Verträglichkeit und Wasserverdünnbarkeit ist der Einbau einer geringen Säurezahl oder Aminzahl von jeweils unter 30, besonders unter 20, bevorzugt einer Aminzahl moglich. Die Harze werden bevorzugt so aufgebaut, daß die Komponenten beim Einbrennen nicht vergilben.

Der Molekulargewichtsbereich wird so ausgewählt, daß sie nicht mehr flüchtig sind, jedoch durch eine verbesserte Fließfähigkeit eine gute Filmbildung erzielen. Eine eventuell erfolgende Präkondensation kann in beliebiger Reihenfolge erfolgen. Zum Neutralisieren der basischen Poly(meth)acrylatharze werden organische Säuren verwendet.

Beispiele für Säuren sind

Ameisensäure, Essigsäure, Propionsäure, Milchsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Neutralisationsmittel zugegeben werden, daß eine stabile Emulgierung der Harzkombination erfolgt. Ein Überschuß an Neutralisationsmittel über den äquivalenten Neutralisationsgrad ist zweckmäßig zu vermeiden. Der MEQ-Wert (Milliäquivalente Neutralisationsmittel pro 100 g Festharz) liegt im allgemeinen zwischen 20 und 80. Es wird ein möglichst niedriger MEQ-Wert angestrebt, um ein möglichst hohes Abscheideäquivalent zu erhalten.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei dem pH-Wert des ET-Bades keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Überzugsmittel kann zum Senken der Viskosität, zum Steuern der Abscheidespannung und zum Verbessern der Haftung und des Verlaufs bis/zu ungefähr 20 Gew.-% organische Lösemittel enthalten. Es wird ein möglichst niedriger Gehalt an organischen Lösemitteln angestrebt, besonders unter 15 Gew.-%, ganz besonders unter 10 gew.-%. Als Lösemittel dienen Alkohole, Glykolether, Ketoalkohole, gegebenenfalls unter Zusatz von aliphatischen und/oder aromatischen Kohlenwasserstoffen verschiedener Kettenlänge. Bei der Auswahl muß berücksichtigt werden, daß das Vernetzungsmittel nicht-wasserlöslich ist und Anteile von wasserunlöslichen Lösemitteln gegebenenfalls den Dispergiervorgang erleichtern und stabilisieren können.

Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 50 Gew.-%. Beim Einstellen des Lackes auf einen höheren Festkörper von 25 bis 50 Gew.-% , bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Elektrodenoberfläche eine gleichmäßige Temperatur aufrechtzuerhalten und ein Absetzen der unlöslichen Bestandteile der Dispersion, z.B. der Pigmente zu verhindern. Der pH-Wert des Lackes liegt im allgemeinen zwischen 4,0 und 7,5, vorzugsweise zwischen 5,0 und 6,5. Die elektrophoretische Abscheidung erfolgt zweckmäßig frühestens 24 Std. nach Herstellen des Bades. Während dieser Zeit wird zweckmäßig kontinuierlich gerührt, um eine gleichmäßige Verteilung zu erhalten.Während des Abscheidens wird das Bad bei Temperaturen von zweckmäßig etwa 15 bis 30 °C gehalten. Festkörper, Abscheidungstemperatur und -zeit , sowie Spannung werden so gewählt, daß die gewünschte Schichtstärke nach Abspülen mit Wasser und/oder

Ultrafiltrat und Einbrennen der Temperaturen von etwa 150 bis 230 °C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das Basisharz (Komponente A) auf dem zu lackierenden Gegenstand an der Kathode koaguliert. Es transportiert hierbei das wasserunlösliche Anreibeharz, Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichtert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Das Mischpolymere, Komponente C) , kann allein oder unter Zusatz von Komponente A) gemäß der Erfindung in üblicher Weise mit Kugelmühle, Dreiwalze oder Perlmühle bei Tempraturen unter 80 °C pigmentiert werden. Hierzu können übliche anorganische und/oder organische Pigmente, Füllstoffe, Korrosionsschutzinhibitoren und Lackhilfsmittel verwendet werden, solange sie im wäßrigen Medium keine störenden Reaktionen eingehen, keine wasserlöslichen Fremdionen einschleppen und beim Altern nicht so ausfallen, daß sie nicht wieder aufgerührt werden kann. Das Pigment-Bindemittelverhältnis ist abhängig von Dispergierfähigkeit und Viskosität des Bindemittels und liegt im allgemeinen zwischen 0,1:1 und 1,5:1. Bevorzugt sind solche Pigmente und damit ET-Bäder, die diese enthalten, die die endgültige Farbgebung des beschichteten Gegenstandes und damit dessen Endlackierung ergeben. Die Lacke sind besonders für die Elektrotauchlackierung von Metallen geeignet und geben nach Einbrennen von bevorzugt 15 bis 45 Minuten bei 160 bis 190 °C glatte, glänzende, nicht-vergilbende Filme mit guter Alterungsstabilität, Haftfestigkeit, Härte und Elastitzität, sowie Korrosionsbeständigkeit.

Aufgrund des speziellen Harzaufbaus der Komponente A) lassen sich Lacke mit verbessertem Korrosionsschutz, speziell mit verbessertem Kantenschutz herstellen.

Herstellungsbeispiel 1 (Amino-poly(meth)acrylatharz A)

725 g Butoxyethanol werden unter Inertgas auf 110 °C unter Einschalten eines Rückflußkühlers erwärmt. Innerhalb von 3 Stunden wird eine Mischung aus 20.7 g Butandioldiacrylat, 192 g Hydroxyethylacrylat, 137 g Butandiol-monoacrylat, 251 g Glycidyl-methacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird eine Stunde bei 110 °C gehalten, 6 g Azo-bis-isobutyronitril zugegeben und dieser Vorgang nach einer weiteren Stunde wiederholt. Nach 3 Stunden 110 °C wird ein Festkörpergehalt von 71.2 Gew.-% und nach Verdünnen auf 50 Gew.-% mit Butoxyethanol eine Viskosität von 2650 mPa•s bei 25 °C gemessen. Nach Abkühlen auf 50 °C werden ein Gemisch von 142 g Diethylamin und 142 g Isopropanol schnell zugegeben (1,10 Mol Amin auf 1,0 Mol Epoxid). Nach 30 Minuten wird auf 65 °C erwärmt, dann eine Stunde gehalten, anschließend auf 105 °C aufgeheizt und dann 3 Stunden gehalten. Nach Abkühlen auf 80 °C wird unter Vakuum Isopropanol und Aminüberschuß sorgfältig abdestilliert.

Endwerte:

| | |
|---|---|
| Festkörpergehalt : | 77,2 Gew.-% (30 min 180 °C) |
| Aminzahl : | 46 mg KOH pro g Festharz |
| Viskosität : | 4,2 Pa•s (nach Verdünnen auf 50 Gew.-% mit Butoxyethanol). |

Herstellungsbeispiel 2 (Vernetzungsmittel B) (blockiertes Polyisocyanat)

666 g Isophorondiisocyanat und 134 g Trimethylolpropan werden mit 431 g Ethylglykolacetat gemischt und unter Rühren mit Luftfeuchtigkeitsauschluß innerhalb einer Stunde auf 60 °C erwärmt. Das zunächst unlösliche und feste Trimethylolpropan schmilzt hierbei und reagiert langsam innerhalb einer weiteren Stunde, wobei die Temperatur auf 90 °C erhöht wird. Zum Vervollständigen der Reaktion beläßt man noch weitere 3 Stunden bei 90 °C und erhält ein NCO-Äquivalentgewicht von 410. Dann werden 366 g $\epsilon$-Caprolactam in 3 Stunden so langsam zugegeben, daß die Reaktionstemperatur von 100 °C nicht überschritten wird. Danach wird solange bei dieser Temperatur gehalten, bis die NCO-Zahl unter 0,1% abgesunken ist. Man destilliert das Lösemittel unter Vakuum weitgehend ab und verdünnt mit Butoxyethanol auf 80 Gew.-%.

Beispiel 1

In einer Perlmühle werden 220,3 g Amino-poly(meth)acrylatharz A, 85,5 g eines Rutilpigments, 7,4 g eines handelsüblichen Extenders auf Silikatbasis und 18,0 g Ethoxypropanol bei einer Temperatur unter 50 °C 30 Minuten lang angerieben.

Danach werden 79,6 g Vernetzungsmittel B zugegeben und unter dem Dissolver vermischt, wobei 9,4 g Ameisensäure (50%ig) zugegeben werden.

Unter Rühren wird mit vollentsalztem Wasser vorsichtig auf 2,0 Liter verdünnt.

Festkörper : 14,5% (erhalten nach 25 min bei 180 °C)
Milliäquivalent Neutralisationsmittel
pro 100 g Festkörper : 33
Spezifische Badleitfähigkeit: 1.340 Mikrosiemens

Auf zinkphosphatiertem Stahlblech (Bonder 132 der Metallgesellschaft) wird bei einer Badtemperatur von 30 °C 2 Minuten lang mit 150 Volt beschichtet.
Nach Abspülen mit Wasser und 25 Minuten langem Einbrennen bei 180 °C ergibt sich eine Trockenfilmstärke von 30 µm.

Vergleichsversuch A

Herstellung wie in Beispiel 1 under quantitativem Austausch des Amino-poly(meth)acrylatharzes A gegen das Harz nach Beipsiel 2 der DE-A-34 36 345.

| | Beispiel 1 | Vergleichsversuch A |
|---|---|---|
| 240 h SS* DIN 50021 | | |
| Haftstörung | 0,57 mm | 0,75 mm |
| Blasengrad m/g* | 0/0 | 0/0 |
| Kantenrost | 0 - 1 | 3 |
| 360 h SS DIN 50021 | | |
| Haftstörung | 0,72 mm | 0,87 mm |
| Blasengrad m/g | 0/0 | 0/0 |
| Kantenrost | 2 | 3 |
| 504 h SS DIN 50021 | | |
| Haftstörung | 0,79 mm | 1,00 mm |
| Blasengrad m/g | 0/0 | 0/0 |
| Kantenrost | 2 | 3 - 4 |
| VDA-Wechseltest, WT 10 | | |
| Unterwanderung | 3,5 mm | 3,5 mm |
| Blasengrad m/g | 0/0 | 1 Blase/Größe 3 |
| Kantenrost | 2 - 3 | 3 - 4 |

SS* = Salzsprühtest
m/g* = Menge/Größe

## Patentansprüche

1. Fremdvernetzende Bindemittelkombination für wasserverdünnbare Lacke, enthatend
   A) 95 bis 50 Gew.-% wasserverdünnbares Amino- und Hydroxylgruppen enthaltendes Poly(meth)-acrylatharz, das erhältlich ist aus radikalisch polymerisierbaren
      a) aminogruppenhaltigen Monomeren und
      b) hydroxylgruppenhaltigen Monomeren oder
      ab) aminogruppen- und hydroxylgruppenhaltigen Monomeren und jeweils
      c) Monomeren, die keine weiteren reaktiven Gruppen enthalten, und
      d) polyungesättigten Monomeren,

   wobei 6 bis 40 Gewichtsteile der Komponente a) und 4 bis 50 Gewichtsteile der Komponente b) oder 8 bis 60 Gewichtsteile der Komponente ab) pro 9,9 bis 80 Gewichtsteile der Komponente c) und pro 0.1 bis 10 Gewichtsteile der Komponente d) eingesetzt werden, und

B) 5 bis 50 Gew.-% Vernetzungsmittel.

2. Fremdvernetzende Bindemittelkombination nach Anspruch 1, dadurch gekennzeichnet, daß das Vernetzungsmittel B) auf umesterungsfähigen Vernetzungsmitteln und/oder blockierten Polyisocyanaten und/oder Formaldehyd-Kondensationsharzen basiert.

3. Fremdvernetzende Bindemittelkombination nach Anpsruch 1 oder 2 enthaltend zusätzlich
   C) 0 bis 30 Gew.-% eines Mischpolymeren, das erhältlich ist durch Umsetzung von
      a) 80 bis 95 Gew.-% eines Copolymerisats aus
         a1) 0,5 bis 40 Gew.-% N[N,N-Di-$C_{1bis4}$-alkylamino-$C_{1bis8}$-alkyl] (meth)acrylamiden und/oder einem Gemisch von N,N-Di-$C_{1bis4}$-alkylamino-$C_{1bis8}$-alkyl(meth)acrylaten und N-substituierten (Meth)acrylamiden und/oder (Meth)acrylamid, wobei das Verhältnis der Amino(meth)acrylate zu den Amido(meth)acrylaten 1:2 bis 2:1 ist,
         a2) 10 bis 40 Gew.-% Hydroxy-$C_{2bis8}$-alkyl(meth)acrylaten,
         a3) 20 bis 89,5 Gew.-% copolymerisierbaren $\alpha,\beta$-olefinisch ungesättigten Verbindungen und
      b) 5 bis 20 Gew.-% eines unverkappte und gegebenenfalls auch verkappte Isocyanatgruppen aufweisenden Polyisocyanat, das Biuret-, Urethan-oder Isocyanurat-Gruppen aufweist.

4. Fremdvernetzende Bindemittelkombination nach einem der vorhergehenden Ansprüche, dadurch gekennzeichnet, daß die Komponente A) ein basisches Poly(meth)acrylatharz ist, mit einer Aminzahl von 30 bis 150, einer Hydroxylzahl von 30 bis 450, einer zahlenmittleren Molmasse $\overline{M}n$ von 2000 bis 200 000, einer Viskosität von 0.5 bis 50 Pa•s in 50%iger Lösung in Monoglykolethern bei 25°C , und mit einer Glasübergangstemperatur von -50 bis +150°C.

5. Fremdvernetzende Bindemittelkombination nach einem der vorhergehenden Ansprüche, dadurch gekennzeichnet, daß die Komponente A) ein fremdvernetzendes Epoxidgruppen-freies Amino-poly(meth)-acrylatharz mit einer Aminzahl von 30 bis 150 und einer Hydroxylzahl von 30 bis 450 ist, erhältlich durch Umsetzung eines Epoxidgruppen enthaltenden Poly(meth)acrylatharzes mit einer mittleren Molmasse $\overline{M}n$ von 600 bis 10 000 und einem Epoxyäquivalentgewicht von 300 bis 4000, mit einem Überschuß an primären und/oder sekundären Monoaminen und/oder Aminoalkoholen, so daß alle freien Epoxidgruppen umgesetzt werden, wobei die nicht umgesetzten überschüssigen Aminverbindungen abdestilliert werden.

6. Kathodisch abscheidbares wäßriges Elektrotauchlacküberzugsmittel (KTL-Bad), das ein Kunstharzbindemittel mit Aminogruppen, welches durch Protonisieren mit Säuren wasserlöslich gemacht werden kann, in Kombination mit Vernetzungsmitteln und gegebenenfalls hydroxyfunktionellen Harzen enthält, und das gegebenenfalls Pigmente, Füllstoffe , Korrosionsschutzinhibitoren, Lackhilfsmittel, Katalysatoren und in einer Menge von bis zu 20 Gew.-%, bezogen auf das Gesamtgewicht des Überzugsmittels, organische Lösemittel enthält, dadurch gekennzeichnet, daß es als Kunstharzbindemittel die fremdvernetzende Bindemittelkombination gemäß einem der Ansprüche 1 bis 5 enthält.

7. Verwendung des wäßrigen Elektrotauchlacküberzugsmittels nach Anspruch 6 zum Beschichten von Gegenständen mit elektrisch leitender Oberfläche an der Kathode.

## Claims

1. An externally crosslinking binder combination for water-dilutable lacquers, containing
   A) 95 to 50 wt.% water-dilutable amino- and hydroxyl-group-containing poly(meth)acrylate resin, obtainable from
      a) amino-group-containing monomers and
      b) hydroxyl-group-containing monomers or
      ab) amino-group- and hydroxyl-group-containing monomers and in each case
      c) monomers which have no other reactive groups and
      d) polyunsaturated monomers
   capable of radical polymerization,
   6 to 40 parts by weight of Component a) and 4 to 50 parts by weight of Component b) or 8 to 60 parts by weight of Component ab) being charged per 9.9 to 80 parts by weight of Component c) and per 0.1 to 10 parts by weight of Component d) and

B) 5 to 50 wt.% cross-linking agent.

2. An externally crosslinking binder combination according to Claim 1, characterized by the fact that the cross-linking agent B) is based on transesterifiable cross-linking agents and/or blocked polyisocyanates and/or formaldehyde condensation resins.

3. An externally crosslinking binder combination according to Claim 1 or 2 containing in addition
C) 0 to 30 wt.% of a copolymer obtainable by reaction of
a) 80 to 95 wt.% of a copolymer of
a1) 0.5 to 40 wt.% N[N,N-di-$C_{1-4}$-alkylamino-$C_{1-8}$-alkyl](meth)acrylamides and/or a mixture of N,N-di-$C_{1-4}$-alkylamino-$C_{1-8}$-alkyl(meth)acrylates and N-substituted (meth)acrylamides and/or meth(acrylamide), the ratio of the amino(meth)acrylates to the amido(meth)acrylates being 1:2 to 2:1,
a2) 10 to 40 wt.% hydroxy-$C_{2-8}$-alkyl(meth)acrylates,
a3) 20 to 89.5 wt.% copolymerizable $\alpha,\beta$-olefinically unsaturated compounds and
b) 5 to 20 wt.% of a polyisocyanate, having uncapped and optionally also capped isocyanate groups, which has biuret, urethane or isocyanurate groups.

4. An externally crosslinking binder combination according to one of the previous claims, characterized by the fact that Component A) is a basic poly(meth)acrylate resin with an amine value of 30 to 150, a hydroxyl value of 30 to 450, a number-average molecular weight $\overline{M}n$ of 2000 to 200,000, a viscosity of 0.5 to 50 Pa.s in 50% solution in monoglycol ethers at 25 °C and a glass transition temperature of -50 to +150 °C.

5. An externally crosslinking binder combination according to one of the previous claims, characterized by the fact that Component A) is an externally crosslinking epoxide-group-free aminopoly(meth)acrylate resin with an amine value of 30 to 150 and a hydroxyl value of 30 to 450, obtainable by reaction of an epoxide-group-containing poly(meth)acrylate resin with a number-average molecular weight $\overline{M}n$ of 600 to 10,000 and an epoxy equivalent weight of 300 to 4000 with an excess of primary and/or secondary monoamines and/or aminoalcohols so that all free epoxide groups are reacted and distilling off the unreacted excess amino compounds.

6. A cathodically depositable aqueous electrocoating agent (cataphoretic coating bath) that contains a synthetic resin binder with amino groups, the synthetic resin binder being solubilizable in water by protonation with acids, in combination with cross-linking agents and optionally hydroxy-functional resins, the aqueous electrocoating agent optionally containing pigments, fillers, corrosion inhibitors, lacquer additives, catalysts and up to 20 wt.%, relative to the total weight of the electrocoating agent, of organic solvents, characterized by the fact that it contains as synthetic resin binder the externally crosslinking binder combination according to one of Claims 1 to 5.

7. The use of the aqueous electrocoating agent according to Claim 6 for the cathodic coating of objects with electrically conductive surface.

**Revendications**

1. Combinaison de liant à réticulation externe pour laques diluables dans l'eau, contenant
A) de 95 à 50% en poids de résine de poly(méth)acrylate contenant des groupes amino et hydroxyle diluable dans l'eau, que l'on peut obtenir à partir de composés susceptibles de subir une polymérisation radicalaire, et qui sont
a) des monomères contenant des groupes amino et
b) des monomères contenant des groupes hydroxy ou
ab) des monomères contenant des groupes hydroxy et des groupes amino et le cas échéant
c) des monomères qui ne contiennent pas d'autres groupes réactifs, et
d) des monomères polyinsaturés,
où l'on utilise de 6 à 40 parties en poids du composant a) et de 4 à 50 parties en poids du composant b) ou de 8 à 60 parties en poids du composant ab) pour 9,9 à 80 parties en poids du composant c) et pour 0,1 à 10 parties en poids du composant d), et
B) de 5 à 50% en poids d'un agent de réticulation.

**2.** Combinaison de liant à réticulation externe selon la revendication 1, caractérisée en ce que l'agent de réticulation B) est à base d'agents de réticulation susceptibles de subir une trans-estérification et/ou de polyisocyanates bloqués et/ou de résines de condensation de formaldéhyde.

**3.** Combinaison de liant à réticulation externe selon la revendication 1 ou 2 contenant en outre

C) de 0 à 30% en poids d'un polymère mixte, que l'on peut obtenir par réaction de

a) 80 à 95% en poids d'un copolymère de

a1) 0,5 à 40% en poids de N[N,N-di-alcoyle en $C_1$ à $C_4$-amino-alcoyle en $C_1$ à $C_8$] - (méth)-acrylamides et/ou d'un mélange de N,N-di-alcoyle en $C_1$ à $C_4$-amino-alcoyle en $C_1$ à $C_8$ -alcoyl(méth)acrylates et de (méth)acrylamides N-substitués et/ou de (méth)acrylamide, où le rapport des amino(méth)acrylates aux amido(méth)acrylates est de 1:2 à 2:1,

a2) de 10 à 40% en poids d'hydroxy-alcoyle en $C_2$ à $C_8$ -(méth)acrylates,

a3) de 20 à 89,5% en poids de composés $\alpha$, $\beta$ -oléfiniquement insaturés copolymérisables et

b) de 5 à 20% en poids d'un polyisocyanate non masqué et présentant également le cas échéant des groupes isocyanates masqués, qui présente des groupes biuret, uréthane ou isocyanurate.

**4.** Combinaison de liant à réticulation externe selon l'une des revendications précédentes, caractérisée en ce que le composant A) est une résine poly(méth)acrylate basique, avec un indice d'amine de 30 à 150, un indice d'hydroxyle de 30 à 450, une masse molaire moyenne en nombre $\overline{M}n$ de 2000 à 200 000, une viscositéde 0,5 à 50 Pa.s dans une solution à 50% dans des monoglycoléthers à 25°C, et avec une température de transition vitreuse de -50 à +150°C.

**5.** Combinaison de liant à réticulation externe selon l'une des revendications précédentes, caractérisée en ce que le composant A) est une résine amino-poly(méth)acrylate dépourvue de groupes époxyde ayant un indice d'amine de 30 à 150 et un indice d'hydroxyde de 30 à 450, que l'on peut obtenir par réaction d'une résine poly(méth)acrylate contenant des groupes époxyde ayant une masse molaire moyenne $\overline{M}n$ de 600 à 10 000 et un poids d'équivalent époxy de 300 à 4000, avec un excès en monoamines primaires et/ou secondaires et/ou en aminoalcools, si bien qu on fait réagir tous les groupes époxyde libres, les composés d'amine en exces n ayant pas réagi étant enlevés par distillation.

**6.** Agent de revêtement applicable par électro-immersion séparable à la cathode (bain KTL), qui contient un agent liant de résine synthétique ayant des groupes amino, qui peut être rendu soluble dans l'eau par protonisation avec des acides, en combinaison avec des agents réticulants et éventuellement des résines à fonctions hydroxy, et qui contient le cas échéant des pigments, des charges, des inhibiteurs de protection contre la corrosion, des adjuvants de laquage, des catalyseurs et, en une quantité allant jusqu'à 20% en poids, par rapport au poids total de l'agent de revêtement, des solvants organiques, caractérisé en ce qu'il contient comme liant de résine synthétique la combinaison de liant à réticulation externe selon l'une des revendications 1 à 5.

**7.** Application d'un agent de revêtement appliquable par électro-immersion aqueuse selon la revendication 6 au recouvrement d'objets avec une surface conductrice de l'électricité à la cathode.